(19) Europäisches Patentamt
European Patent Office
Office européen des brevets

(11) **EP 3 582 325 A1**

(12) **EUROPEAN PATENT APPLICATION**
published in accordance with Art. 153(4) EPC

(43) Date of publication:
**18.12.2019 Bulletin 2019/51**

(51) Int Cl.:
*H01Q 13/08* (2006.01)     *H01Q 21/06* (2006.01)
*H01Q 23/00* (2006.01)

(21) Application number: **18750977.3**

(22) Date of filing: **08.02.2018**

(86) International application number:
**PCT/JP2018/004443**

(87) International publication number:
**WO 2018/147381 (16.08.2018 Gazette 2018/33)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD TN**

(30) Priority: **13.02.2017 JP 2017023977**

(71) Applicant: **Hitachi Metals, Ltd.**
**Tokyo 108-8224 (JP)**

(72) Inventors:
• **HAYASHI Kenji**
**Tokyo 108-8224 (JP)**
• **ENOKI Masato**
**Tokyo 108-8224 (JP)**
• **IKEDA Hatsuo**
**Tokyo 108-8224 (JP)**

(74) Representative: **Wu, Sau Ming Samuel**
**Fleuchaus & Gallo Partnerschaft mbB**
**Patentanwälte**
**Steinerstraße 15/Haus A**
**81369 München (DE)**

(54) **PLANAR ANTENNA**

(57)     A planar antenna includes a multilayer ceramic body **10** having an upper surface and a lower surface, and including a plurality of ceramic layers stacked together, at least one radiation conductor **31** positioned at one of interfaces between the plurality of ceramic layers in the multilayer ceramic body or on the upper surface of the multilayer ceramic body, a ground conductor **32** positioned at another one of the interfaces between the plurality of ceramic layers in the multilayer ceramic body or on the lower surface of the multilayer ceramic body, and a low-dielectric-constant region **115** positioned in the multilayer ceramic body between the radiation conductor and the ground conductor, and having a plurality of hollow portions.

FIG.5
(a)

(Cont. next page)

FIG.5

(b)

FIG.5

(c)

FIG.5

(d)

**Description**

## TECHNICAL FIELD

The present application relates to planar antennas, co-fired ceramic substrates, radio communication modules, and production methods for co-fired ceramic substrates.

## BACKGROUND ART

The amount of information communicated over the Internet has been dramatically increasing, and there has been a demand for radio communication techniques capable of propagating a large volume of information. There also has been a demand for television broadcasting of higher-definition images.

In radio communication, the higher the carrier frequency, the broader the frequency band that can be allocated for information communication, i.e. a large amount of information can be propagated. Therefore, microwave radio communication, particularly in the range of about 1 GHz to about 30 GHz, has in recent years been widely used, including wireless LAN, mobile telephone communication networks, satellite communication, etc.

Among the antennas used in such high-frequency radio communication is, for example, a planar antenna. Patent Document 1 discloses a planar antenna for a GPS reception system in which an antenna conductor is provided on a printed wiring board. The antenna conductor is covered with a solder resist for corrosion prevention. Patent Document 2 discloses a planar antenna for microwave and millimeter wave-range communication systems in which a conductor film and a protective film covering the conductor film are provided on a resin substrate.

## CITATION LIST

## PATENT LITERATURE

Patent Document No. 1: Japanese Laid-Open Patent Publication No. H06-140831
Patent Document No. 2: Japanese Laid-Open Patent Publication No. 2012-054826

## SUMMARY OF INVENTION

### TECHNICAL PROBLEM

In recent years, as short-range radio communication techniques for propagating a larger volume of information, for example, quasi-millimeter wave/millimeter wave band radio communication techniques have attracted attention.

A non-limiting example embodiment of the present application provides a planar antenna, co-fired ceramic substrate, and quasi-microwave/centimeter wave/quasi-millimeter wave/millimeter wave radio communication module that can be used in quasi-microwave/centimeter wave/quasi-millimeter wave/millimeter wave band radio communication.

### SOLUTION TO PROBLEM

A planar antenna of the present disclosure includes a multilayer ceramic body having an upper surface and a lower surface, and including a plurality of ceramic layers stacked together, at least one radiation conductor positioned at one of interfaces between the plurality of ceramic layers in the multilayer ceramic body or on the upper surface of the multilayer ceramic body, a ground conductor positioned at another one of the interfaces between the plurality of ceramic layers in the multilayer ceramic body or on the lower surface of the multilayer ceramic body, and a low-dielectric-constant region positioned in the multilayer ceramic body between the radiation conductor and the ground conductor, and having a plurality of hollow portions.

A co-fired ceramic substrate of the present disclosure includes a multilayer ceramic body having an upper surface and a lower surface, and including a plurality of ceramic layers stacked together, at least one radiation conductor positioned at one of interfaces between the plurality of ceramic layers in the multilayer ceramic body or on the upper surface of the multilayer ceramic body, a ground conductor positioned at another one of the interfaces between the plurality of ceramic layers in the multilayer ceramic body or on the lower surface of the multilayer ceramic body, a low-dielectric-constant region positioned in the multilayer ceramic body between the radiation conductor and the ground conductor, and having a plurality of hollow portions, a plurality of conductor patterns positioned at another interface that is between the plurality of ceramic layers and is positioned closer the lower surface than is the radiation conductor, and

a plurality of conductive vias provided in a ceramic layer of the plurality of ceramic layer that is positioned closer to the lower surface than is the radiation conductor. The radiation conductor, the ground conductor, and a portion of the plurality of ceramic layers positioned between the radiation conductor and the ground conductor form a planar antenna. The plurality of conductor patterns and the plurality of conductive vias form a passive component and an interconnect.

As viewed from above the multilayer ceramic body, an outer edge of the low-dielectric-constant region may surround the entire radiation conductor.

As viewed from above the multilayer ceramic body, an outer edge of the ground conductor may surround the entire radiation conductor.

The radiation conductor may be positioned on the upper surface of the multilayer ceramic body.

The plurality of hollow portions may be a plurality of through holes provided in at least one ceramic layer of the plurality of ceramic layers.

The plurality of hollow portions may be a plurality of through holes provided in each of two or more adjacent ceramic layers of the plurality of ceramic layers, and the plurality of through holes formed in the two or more respective ceramic layers may be aligned in a stacking direction of the two or more ceramic layers.

The plurality of through holes may be arranged in two directions or in a staggered pattern in a plane perpendicular to the stacking direction.

The plurality of hollow portions may be a plurality of through holes provided in each of two or more adjacent ceramic layers of the plurality of ceramic layers, and positions of the plurality of through holes may be different between two adjacent ceramic layers.

The plurality of hollow portions may be a plurality of through holes provided in each of two or more ceramic layers of the plurality of ceramic layers, and a ceramic layer in which a through hole is not formed may be positioned between the two or more ceramic layers.

The plurality of hollow portions may be provided in at least one ceramic layer of the plurality of ceramic layer, and may be a space that does not penetrate through the ceramic layer.

In the planar antenna, there may be a plurality of the radiation conductors.

As viewed from above the multilayer ceramic body, an outer edge of the low-dielectric-constant region may surround the entire radiation conductor.

A quasi-microwave/centimeter wave/quasi-millimeter wave/millimeter wave radio communication module of the present disclosure include any of the above co-fired ceramic substrates, and an active component coupled to the plurality of electrodes positioned on the lower surface of the multilayer ceramic body.

A method for producing a co-fired ceramic substrate of the present disclosure, includes a step (A) of preparing a plurality of ceramic green sheets including a first ceramic green sheet on which a conductive paste pattern of a radiation conductor is disposed, a second ceramic green sheet on which a conductive paste pattern of a ground conductor is disposed, and at least one third ceramic green sheet including a region in which a plurality of through holes are formed, a step (B) of stacking the plurality of ceramic green sheets together and joining the plurality of ceramic green sheets together by pressing such that the conductive paste pattern of the radiation conductor of the first ceramic green sheet is positioned above or below the region of the at least one third ceramic green sheet, and the at least one third ceramic green sheet is positioned between the first ceramic green sheet and the second ceramic green sheet, to obtain a green sheet laminate, and a step (C) of heating the green sheet laminate to sinter the green sheet laminate.

The method may further include a step of, between the step (A) and the step (B), filling the plurality of through holes of the at least one third ceramic green sheet with a paste containing an organic resin. In the step (C), the paste containing the organic resin may be caused to disappear due to the heating.

Another method for producing a co-fired ceramic substrate of the present disclosure, includes a step (A) of preparing a plurality of ceramic green sheets including a first ceramic green sheet on which a conductive paste pattern of a radiation conductor is disposed, a second ceramic green sheet on which a conductive paste pattern of a ground conductor is disposed, and at least one third ceramic green sheet including a region in which a plurality of microcapsules of an organic material are disposed, a step (B) of stacking the plurality of ceramic green sheets together and joining the plurality of ceramic green sheets together by pressing such that the conductive paste pattern of the radiation conductor of the first ceramic green sheet is positioned above or below the region of the at least one third ceramic green sheet, and the at least one third ceramic green sheet is positioned between the first ceramic green sheet and the second ceramic green sheet, to obtain a green sheet laminate, and a step (C) of heating the green sheet laminate to cause a binder and the microcapsules to disappear from the green sheet laminate, and sinter the green sheet laminate.

**ADVANTAGEOUS EFFECTS OF INVENTION**

According to the embodiment of the present disclosure, a planar antenna applicable to quasi-microwave/centimeter wave/quasi-millimeter wave/millimeter wave band radio communication, and a co-fired ceramic substrate and a quasi-microwave/centimeter wave/quasi-millimeter wave/millimeter wave radio communication module that include the planar antenna, are provided. A production method for a co-fired ceramic substrate including the planar antenna is also provided.

## BRIEF DESCRIPTION OF DRAWINGS

FIGS. **1(a), 1(b),** and **1(c)** are a schematic top view, a schematic bottom view, and a cross-sectional view taken along line **1c-1c** of FIG. **1(b)** showing an example of a first embodiment of a co-fired ceramic substrate.

FIG. **2** is a schematic top view of the co-fired ceramic substrate of FIG. **1,** together with hollow spaces and a ground conductor.

FIGS. **3(a)** to **3(f)** are cross-sectional views showing another example arrangement of a radiation conductor and a ground conductor of a co-fired ceramic substrate.

FIGS. **4(a)** to **4(f)** are cross-sectional views showing steps of an embodiment of a production method for a co-fired ceramic substrate.

FIG. **5(a)** is a schematic cross-sectional view showing a cross-section of a planar antenna of an example of a second embodiment of a co-fired ceramic substrate, FIG. **5(b)** is a top view of a low-dielectric-constant region positioned in a multilayer ceramic body, FIG. **5(c)** is another top view of a low-dielectric-constant region positioned in a multilayer ceramic body, and FIG. **5(d)** is a cross-sectional view of the low-dielectric-constant region taken along **5d-5d** of FIG. **5(b).**

FIG. **6(a)** is a top view of a low-dielectric-constant region positioned in a multilayer ceramic body of another example of the second embodiment of a co-fired ceramic substrate, FIG. **6(b)** is a cross-sectional view of the low-dielectric-constant region taken along line **6b-6b** of FIG. **6(a),** and FIGS. **6(c)** and **6(d)** are top views of a ceramic layer included in a low-dielectric-constant region.

FIG. **7(a)** is a top view of a low-dielectric-constant region positioned in a multilayer ceramic body of another example of the second embodiment of a co-fired ceramic substrate, FIG. **7(b)** is a cross-sectional view of the low-dielectric-constant region taken along line **7b-7b** of FIG. **7(a),** and FIGS. **7(c)** and **7(d)** are top views of a ceramic layer included in a low-dielectric-constant region.

FIG. **8(a)** is a schematic cross-sectional view showing a planar antenna of another example of the second embodiment of a co-fired ceramic substrate, and FIG. **8(b)** is a cross-sectional view of a ceramic layer included in a low-dielectric-constant region.

FIGS. **9(a)** and **9(b)** are a bottom view and a schematic cross-sectional view showing an embodiment of quasi-millimeter wave/millimeter wave band radio communication.

FIGS. **10(a)** and **10(b)** are a cross-sectional view and a top view showing a structure of a planar antenna used in experimental examples.

FIG. **11** is a graph showing a result of Experimental Example 1.

FIG. **12** is a graph showing a result of Experimental Example 3.

FIGS. **13(a)** to **13(d)** are cross-sectional views showing steps of an example of a production method for a co-fired ceramic substrate of the second embodiment.

FIG. **14** is a diagram showing a structure used in calculation of Experimental Example 4.

FIG. **15** is a graph showing a result of Experimental Example 4.

FIG. **16** is a graph showing a result of Experimental Example 4.

FIG. **17** is a graph showing a result of Experimental Example 4.

FIG. **18** is a graph showing a result of Experimental Example 4.

FIG. **19** is a graph showing a result of Experimental Example 4.

## DESCRIPTION OF EMBODIMENTS

The present inventors have extensively studied planar antennas that can be used in quasi-microwave/centimeter wave/quasi-millimeter wave/millimeter wave band radio communication. In quasi-microwave band radio communication, radio waves having a wavelength of 10 cm to 30 cm and a frequency of 1 GHz to 3 GHz are used as carrier waves. In centimeter wave band radio communication, radio waves having a wavelength of 1 cm to 10 cm and a frequency of 3 GHz to 30 GHz are used as carrier waves. In millimeter wave band radio communication, radio waves having a wavelength of 1 mm to 10 mm and a frequency of 30 GHz to 300 GHz are used as carrier waves. In quasi-millimeter wave band radio communication, radio waves having a wavelength of 10 mm to 30 mm and a frequency of 10 GHz to 30 GHz are used as carrier waves. In quasi-microwave/centimeter wave/quasi-millimeter wave/millimeter wave band radio communication, planar antennas have a size of several centimeters or sub-millimeters. Therefore, for example, in the case where a quasi-microwave/centimeter wave/quasi-millimeter wave/millimeter wave radio communication circuit is constructed using a multilayer ceramic fired substrate, a planar antenna can be implemented on the multilayer ceramic fired substrate.

Meanwhile, for example, a quasi-millimeter wave/millimeter wave band radio communication circuit is significantly affected by transmission loss. A loss $\alpha$ caused by a dielectric material that occurs due to conversion of radio waves transmitted in radio communication into heat is represented by expression (1). In expression (1), f represents the frequency of carrier waves, $\varepsilon_r$ represents the relative dielectric constant of the dielectric material, and $\tan\delta$ represents the dielectric loss tangent of the dielectric material. As can be seen from expression (1), the loss $\alpha$ caused by the dielectric material is proportional to $\tan\delta$, and is proportional the (1/2) th power of $\varepsilon_r$, and the loss $\alpha$ decreases with a decrease in $\tan\delta$ and $\varepsilon_r$.

$$\alpha \; \propto \; f \cdot \sqrt{(\varepsilon_r)} \cdot \tan\delta \qquad\qquad (1)$$

$\varepsilon_r$ and $\tan\delta$ are physical properties of a ceramic material contained in the multilayer ceramic fired substrate. When the composition and firing conditions of the ceramic are adjusted, both of $\varepsilon_r$ and $\tan\delta$ cannot always be simultaneously reduced. The present inventors have arrived at a novel planar antenna that is provided on a co-fired ceramic fired substrate and in which $\varepsilon_r$ can be structurally adjusted. An embodiment of a planar antenna, co-fired ceramic substrate, and quasi-microwave/centimeter wave/quasi-millimeter wave/millimeter wave radio communication module according to the present disclosure will now be described in detail.

(First Embodiment)

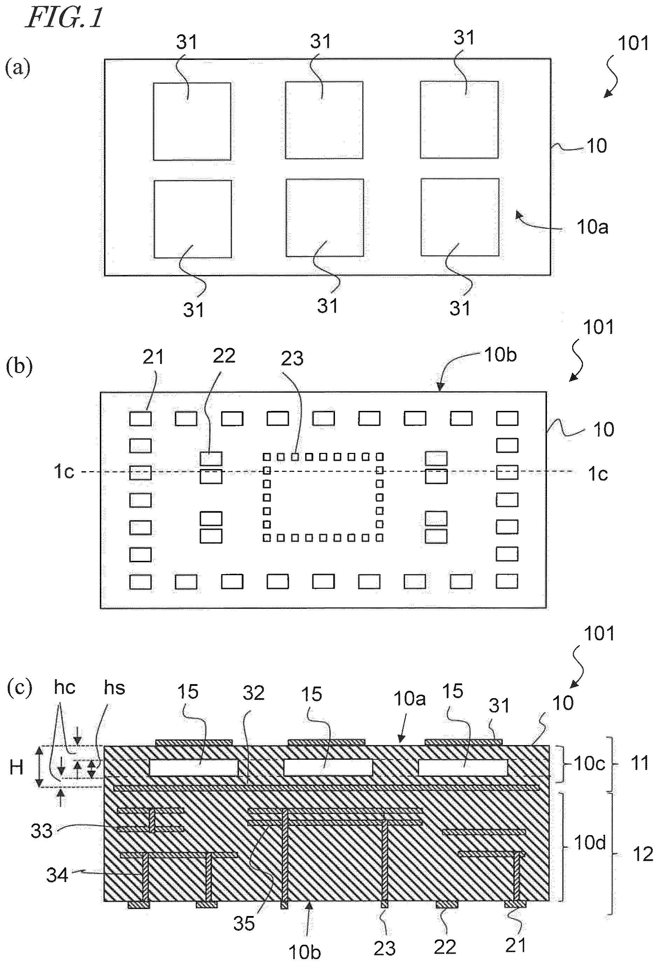

A first embodiment of a planar antenna and a co-fired ceramic substrate will be described. FIGS. **1(a)** and **1(b)** are schematic top and bottom views of a co-fired ceramic substrate **101** according to the first embodiment of the present disclosure. FIG. **1(c)** is a cross-sectional view of the co-fired ceramic substrate **101** taken along line **1c-1c** of FIG. **1(b)**.

[1. Structures of Planar Antenna and Co-Fired Ceramic Substrate]

The co-fired ceramic substrate **101** includes a multilayer ceramic body **10**, hollow spaces **15** provided in the multilayer ceramic body **10**, at least one radiation conductor **31**, and a ground conductor **32**.

The multilayer ceramic body **10** has an upper surface **10a** and a lower surface **10b**. The multilayer ceramic body **10** has a plurality of ceramic layers obtained by stacking green sheets together and firing the green sheets. In the multilayer ceramic body **10**, there may be no clear interface between the plurality of ceramic layers. Each ceramic layer corresponds to one green sheet.

The radiation conductor **31** is positioned on the upper surface **10a** or at one of the interfaces between the plurality of ceramic layers. The ground conductor **32** is positioned at another one of the interfaces between the plurality of ceramic layers that is closer to the lower surface **10b** than is the radiation conductor **31**, or on the lower surface **10b**. In FIG. **1,** the radiation conductor **31** is positioned on the upper surface **10a**, and the ground conductor **32** is positioned in the multilayer ceramic body **10,** closer to the lower surface **10b** than is the radiation conductor **31**.

The plurality of ceramic layers of the multilayer ceramic body **10** include a first portion **10c** positioned between the upper surface **10a** and the ground conductor **32,** and a second portion **10d** positioned between the lower surface **10b** and the ground conductor **32**. The first portion **10c** includes the hollow spaces **15**. As shown in FIG. **1(c),** the radiation conductor **31**, the first portion **10c** including the hollow spaces **15** of the multilayer ceramic body **10,** and the ground conductor **32** constitute a planar antenna **11**. The planar antenna **11** is a patch antenna in this embodiment, and is a microstrip antenna including the radiation conductor **31,** the ground conductor **32,** and one or more ceramic layers interposed between the radiation conductor **31** and the ground conductor **32**.

The radiation conductor **31** is a radiation element that radiates radio waves, and is formed of a conductive layer. As shown in FIG. **1(a),** in this embodiment, the radiation conductor **31** has a rectangular (square) shape. However, the radiation conductor **31** may have a circular shape or other shapes. In this embodiment, the planar antenna **11** includes six radiation conductors **31,** which are two-dimensionally arranged on the upper surface **10a**. The radiation conductors **31** may be two-dimensionally arranged in the same interface of the interfaces between the plurality of ceramic layers. The plurality of radiation conductors **31** constitute an array antenna, which enhances the directivity of radio waves that are radiated or received. For example, in the case where the shape of the radiation conductor **31** is rectangular, the length of a side of the radiation conductor **31** is 1/2 of the wavelength of carrier waves, and for example, 5 mm or less in the case of millimeter waves.

The hollow spaces **15** are positioned between the respective radiation conductors **31** on the upper surface **10a** and the ground conductor **32**. The hollow spaces **15** are a space that is not filled with the ceramic material included in the multilayer ceramic body **10** or any other solid or liquid material. The hollow spaces **15** are filled with the atmosphere or a gas filling an ambient gas during firing. The hollow spaces **15** may be in communication with the outside of the multilayer ceramic body **10,** or may be a space isolated from the outside.

The ground conductor **32** functions as a ground for the microstrip antenna, and is formed of a conductive layer.

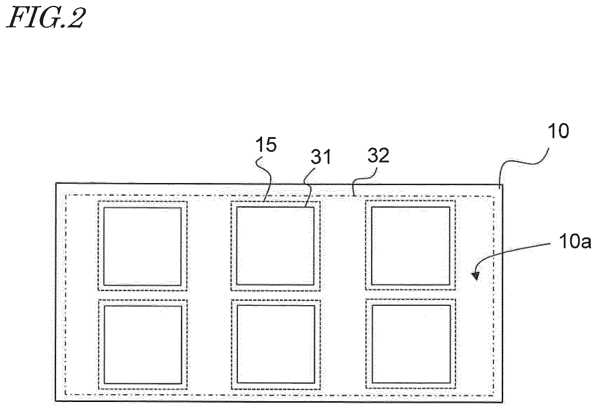

FIG. **2** is a top view of the co-fired ceramic substrate **101,** indicating the hollow spaces **15** and the ground conductor **32** by dashed lines and a dash-dot line, respectively. As shown in FIG. **2,** in a top view the upper surface **10a,** the outer edge of each hollow space **15** completely surrounds the corresponding radiation conductor **31.** In other words, each radiation conductor **31** is preferably entirely positioned in the region of the corresponding hollow space **15** in the stacking direction of the multilayer ceramic body **10.** In addition, in a top view, the outer edge of the ground conductor **32** preferably completely surround the entire array of the radiation conductors **31.** In other words, the radiation conductors **31** are all positioned in the region of the ground conductor **32** in the stacking direction of the multilayer ceramic body **10.** In this embodiment, the ground conductor **32** has a greater size than that of the entire array of the radiation conductors **31.** Alternatively, the planar antenna **11** may include six ground conductors **32.** In that case, in a top view, the outer edge of each ground conductor **32** preferably completely surrounds the corresponding radiation conductor **31.** In other words, each radiation conductor **31** is preferably entirely positioned in the region of the corresponding ground conductor **32** in the stacking direction of the multilayer ceramic body **10.**

As shown in FIG. **1(c),** in the planar antenna **11,** the relative dielectric constant of the material positioned between the radiation conductors **31** and the ground conductor **32** affects the radiation efficiency of the planar antenna **11.** As indicated by expression (1), the loss $\alpha$ caused by the dielectric material of the planar antenna **11** is proportional to the (1/2)th power of the relative dielectric constant $\varepsilon_r$, and the loss $\alpha$ decreases with a decrease in $\varepsilon_r$. In the planar antenna **11,** the hollow spaces **15** are positioned between the radiation conductors **31** and the ground conductor **32,** and the gas filling the hollow spaces **15** is about 1 irrespective of the type and composition. In contrast to this, the relative dielectric constant of the ceramic material included in the multilayer ceramic body **10** is, for example, about 3 to about 15. Therefore, the effective relative dielectric constant between the radiation conductors **31** and the ground conductor **32** is smaller than when the hollow spaces **15** are not provided. In other words, the planar antenna **11** can inhibit the loss caused by the dielectric material, due to the presence of the hollow spaces **15,** thereby achieving high radiation efficiency. The reduction in effective relative dielectric constant can lead to a reduction in the loss $\alpha$ caused by the dielectric material, and therefore, the band and gain of the planar antenna can also be increased.

The effective relative dielectric constant between the radiation conductors **31** and the ground conductor **32** can also be adjusted by changing a height of the hollow spaces **15.** As shown in FIG. **1(c),** H = hc + hs, where H represents a space between the radiation conductor **31** and the ground conductor **32,** hs represents a height in the stacking direction of the hollow spaces **15,** and hc represents the sum of heights of the ceramic layers. By decreasing hc/H or by increasing hs/H, the effective relative dielectric constant can be reduced, and therefore, the radiation efficiency of the planar antenna can be improved. In other words, the effective relative dielectric constant, which affects the radiation efficiency, can be adjusted without changing the ceramic material included in the multilayer ceramic body **10.**

The space H between the radiation conductors **31** and the ground conductor **32** is, for example, not less than 50 $\mu$m and not more than 1 mm. As a result, a quasi-millimeter wave/millimeter wave band microstrip antenna can be configured. As the height hs of the hollow spaces **15** increases, the effective relative dielectric constant can preferably be reduced. However, if the height hs of the hollow spaces **15** is excessively great, for example, the ceramic layer that supports the radiation conductors **31** becomes thinner, and therefore, a sufficient structural strength may not be obtained. Therefore, the height hs of the hollow spaces **15** is preferably, for example, not less than 25 $\mu$m and not more than 900 $\mu$m.

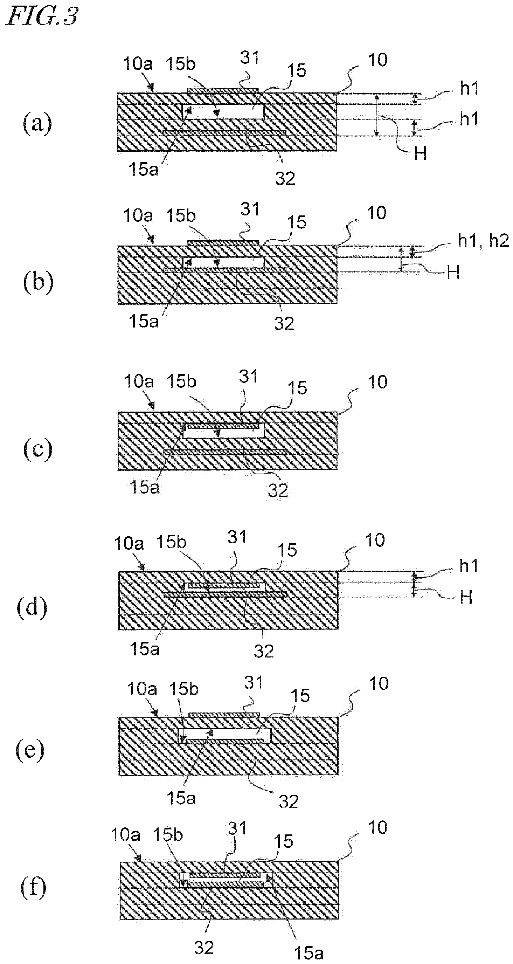

In the planar antenna **11** of the co-fired ceramic substrate, the arrangement of the radiation conductors **31,** the ground conductor **32,** and the hollow spaces **15** in the multilayer ceramic body **10** may be adapted in various ways. FIGS. **3(a)** to **3(d)** show examples. In these figures, the ground conductor **32** shown has a size corresponding to one radiation conductor **31.** Alternatively, the ground conductor **32** may have a size corresponding to the array of six radiation conductors **31** as shown in FIGS. **1** and **2.**

As shown in FIGS. **3(a)** and **3(b),** the radiation conductors **31** can be positioned on the upper surface **10a** of the multilayer ceramic body **10.** With this configuration, the radiation conductors **31** are in contact with an external environment in which radio waves are directly radiated, and therefore, high radiation efficiency is achieved. As shown in FIG. **3(a),** in this case, a lower surface **15b** of the hollow space **15** is separated from the ground conductor **32,** and a ceramic layer may be present between the lower surface **15b** of the hollow space **15** and the ground conductor **32.** Alternatively, as shown in FIG. **3(b),** the ground conductor **32** may be in contact with the hollow space **15,** and the ground conductor **32** may define the lower surface **15b.**

Alternatively, as shown in FIGS. **3(c)** and **3(d),** the radiation conductor **31** may be in contact with the hollow space **15.** Specifically, in forms shown in FIGS. **3(c)** and **3(d),** an upper surface **15a** of the hollow space **15** is defined by one of the interfaces between the plurality of ceramic layers at which the radiation conductor is positioned, and the radiation conductor **31** is positioned at the upper surface **15a.** In this structure, the radiation conductor **31** is covered by the ceramic layer, and is not exposed to the external environment, and therefore, a reduction in the radiation efficiency and a change in characteristics of the antenna can be inhibited which would otherwise be caused by corrosion or oxidation of the radiation conductor **31** due to exposure thereof to the external environment. In addition, deformation, etc., of the radiation conductor **31** can be inhibited which would otherwise be caused by some external force applied to the radiation conductor **31** when a quasi-microwave/centimeter wave/quasi-millimeter wave/millimeter wave radio communication module is produced using the co-fired ceramic substrate **101**. In particular, a quasi-millimeter wave/millimeter wave band antenna has a small size, and therefore, a small change in shape may cause a significant change in characteristics, and therefore, it is important to protect the radiation conductor **31**.

In the case where the radiation conductor **31** is in contact with the hollow space **15**, as shown in FIG. **3(c)** the lower surface **15b** of the hollow space **15** may be separated from the ground conductor **32**, and a ceramic layer may be present between the lower surface **15b** of the hollow space **15** and the ground conductor **32**. Alternatively, as shown in FIG. **3(d)**, the ground conductor **32** may be in contact with the hollow space **15**, and the ground conductor **32** may define the lower surface **15b**.

In addition, in the case where the hollow space **15** has a size greater than that of the ground conductor **32** in a top view, as shown in FIGS. **3(e)** and **3(f)** the lower surface **15b** of the hollow space **15** may be defined by one of the interfaces between the plurality of ceramic layers that is positioned at the ground conductor **32**, and the ground conductor **32** may be positioned at the lower surface **15b**. In particular, in the structure of FIG. **3(f)**, only the hollow space **15** is interposed between the radiation conductor **31** and the ground conductor **32**, and therefore, the effective relative dielectric constant is about 1, and therefore, the loss $\alpha$ can be significantly reduced.

The co-fired ceramic substrate **101** may include an interconnection circuit. Specifically, as shown in FIG. **1(c)**, the co-fired ceramic substrate **101** may further include a passive component pattern **33** and an interconnection pattern **35** that are provided at a boundary between the plurality of ceramic layers that is positioned closer to the lower surface **10b** than is the ground conductor **32**, and conductive vias **34** that are provided in the plurality of ceramic layers that are positioned closer to the lower surface **10b** than is the ground conductor **32**. The passive component pattern **33** is, for example, a conductive layer, or a ceramic having a predetermined resistance value, and forms an inductor, a capacitor, a resistor, etc. The conductive vias **34** and the interconnection pattern **35** are coupled to the passive component pattern **33**, the ground conductor **32**, etc., to form a predetermined circuit.

Positioned on the lower surface **10b** of the multilayer ceramic body **10** are, for example, an electrode **21** for connecting to an external substrate, an electrode **22** for connecting to a passive component, and an electrode **23** for connecting to a passive component such as an integrated circuit. The conductive vias **34** electrically connect the electrodes **21, 22,** and **23** to the interconnection pattern **35**, etc.

These elements provided in the plurality of ceramic layers that are positioned closer to the lower surface **10b** than is the ground conductor **32**, constitute an interconnection circuit **12** including passive components. By connecting a passive component, an integrated circuit, etc., to the above electrodes **22** and **23** of the interconnection circuit **12**, a radio communication circuit is configured.

The interconnection circuit **12** and the radiation conductors **31** of the planar antenna **11** may be electrically connected directly together by at least the conductive vias **34** or the interconnection pattern **35** formed in the multilayer ceramic body **10**. Alternatively, at least the conductive vias **34** or the interconnection pattern **35** may be disposed at a position where electromagnetic coupling with the radiation conductors **31** may be established. In that case, for example, a slot may be provided in the ground conductor **32**, and the radiation conductors **31** and the interconnection pattern **35** may be disposed through the slot, or the interconnection pattern **35** may be provided between the radiation conductors **31** and the ground conductor **32**.

The co-fired ceramic substrate **101** may be either a low temperature fired ceramic (LTCC, Low Temperature Co-fired Ceramics) substrate or a high temperature fired ceramic (HTCC, High Temperature Co-fired Ceramics) substrate. In terms of high-frequency characteristics, it may be more preferable that a low temperature fired ceramic substrate be used. In the ceramic layers of the multilayer ceramic body **10**, the radiation conductors **31**, the ground conductor **32**, the passive component pattern **33**, the interconnection pattern **35**, and the conductive vias **34**, a ceramic material and a conductive material are used which are suitable for the firing temperature, application, etc., and radio communication frequency, etc. Conductive pastes for forming the radiation conductors **31**, the ground conductor **32**, the passive component pattern **33**, the interconnection pattern **35**, and the conductive vias **34**, and green sheets for forming the ceramic layers of the multilayer ceramic body **10**, are co-fired. In the case where the co-fired ceramic substrate **101** is a low temperature fired ceramic substrate, a ceramic material and a conductive material that can be fired in a temperature range of about 800°C to about 1000°C are used. For example, a ceramic material containing Al, Si, and Sr as main components and Ti, Bi, Cu, Mn, Na, and K as sub-components, a ceramic material containing Al, Si, and Sr as main components and Ca, Pb, Na, and K as sub-components, a ceramic material containing Al, Mg, Si, and Gd, or a ceramic material containing Al, Si, Zr, and Mg, is used. Alternatively, a conductive material Ag or Cu is used. The ceramic material has a dielectric constant of about 3-15. In the case where the co-fired ceramic substrate **101** is a high temperature fired multilayer ceramic substrate, a ceramic material containing Al as a main component and a conductive material containing W (tungsten) or Mo (molybdenum) can be used.

More specifically, as a LTCC material, various materials such as, for example, Al-Mg-Si-Gd-O-based dielectric materials, dielectric materials containing a crystal phase of $Mg_2SiO_4$ and Si-Ba-La-B-O-based glass, etc., Al-Si-Sr-O-based dielectric materials, and Al-Si-Ba-O-based dielectric materials, which have a relative dielectric constant of 5-10, or Bi-Ca-Nb-O-based dielectric materials, which have a high dielectric constant (relative dielectric constant: 50 or more), can be used.

For example, in the case where an Al-Si-Sr-O-based dielectric material contains oxide of Al, Si, Sr, and Ti as main components, the Al-Si-Sr-O-based dielectric material preferably contains 10-60 mass% of $Al_2O_3$, 25-60 mass% of $SiO_2$, 7.5-50 mass% of SrO, 20 mass% or less (including 0) of $TiO_2$, assuming that Al, Si, Sr, and Ti, which are a main component, are converted into $Al_2O_3$, $SiO_2$, SrO, and $TiO_2$, respectively. The Al-Si-Sr-O-based dielectric material also preferably contains, as a sub-component, at least one of the group of Bi, Na, K, and Co, in an amount of 0.1-10 parts by mass in terms of $Bi_2O_3$, 0.1-5 parts by mass in terms of $Na_2O$, 0.1-5 parts by mass in terms of $K_2O$, and 0.1-5 parts by mass in terms of CoO, and further, at least one of the group of Cu, Mn, and Ag in an amount of 0.01-5 parts by mass in terms of CuO, 0.01-5 parts by mass in terms of $Mn_3O_4$, and 0.01-5 parts by mass of Ag, with respect to 100 parts by mass of the main component. The Al-Si-Sr-O-based dielectric material may also contain other incidental impurities.

The first portion **10c** of the multilayer ceramic body **10** may have the same composition as that of the second portion **10d,** and may be formed of the same material as that of the second portion **10d.** Alternatively, in order to improve the radiation efficiency of the planar antenna **11,** the first portion **10c** of the multilayer ceramic body **10** may have a composition different from that of the second portion **10d,** and may be formed of a material different from that of the second portion **10d.** The first portion **10c** having a composition different from that of the second portion **10d** can have a dielectric constant different from that of the second portion **10d,** and can have improved radiation efficiency.

[2. Production Method for Co-fired Ceramic Substrate **101**]

Next, a production method for the co-fired ceramic substrate **101** will be described. The co-fired ceramic substrate **101** can be produced using a production method similar to that for the LTCC substrate or the HTCC substrate.

(1) Step (A) of Preparing Ceramic Green Sheet

For example, initially, a ceramic material containing the above chemical elements is prepared, optionally pre-baked at, for example, 700°C to 850°C, and pulverized for granulation. To the ceramic material, powder of a glass component, an organic binder, a plasticizer, and a solvent are added to obtain a slurry of a mixture thereof. In the case where the first portion **10c** and the second portion **10d** of the multilayer ceramic body **10** are formed of different materials so as to, for example, have different dielectric constants, two types of slurries containing different materials are prepared. In addition, powder of the above conductive material is mixed with an organic binder and a solvent, etc., to obtain a conductive paste.

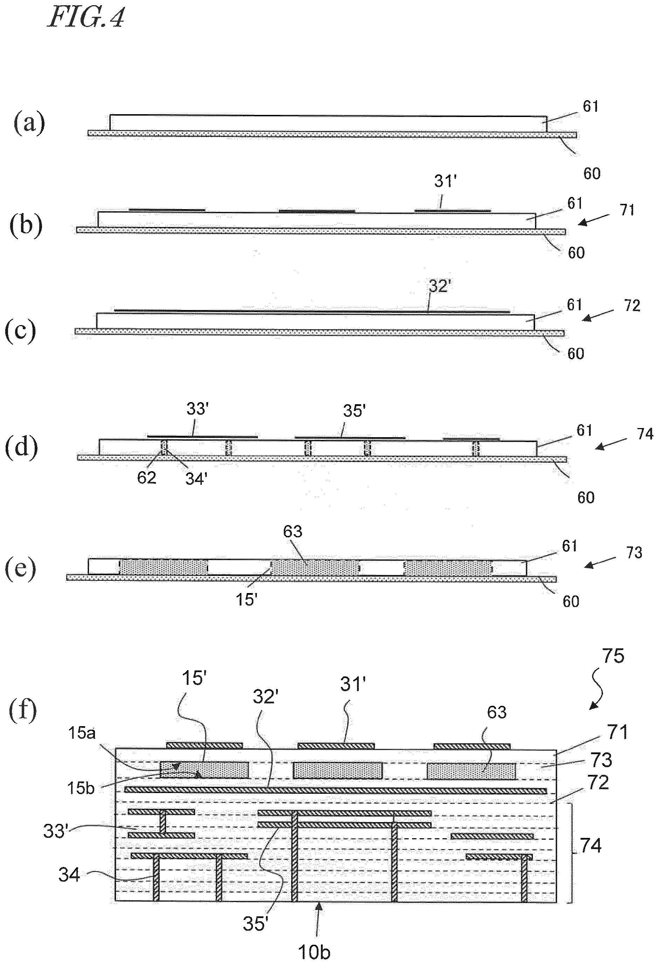

Using doctor blading, rolling (extrusion), printing, inkjet coating, transferring, or the like, as shown in FIG. **4(a),** a layer having a predetermined thickness is formed from the slurry on a carrier film 60, and is dried. The slurry layer is cut to obtain ceramic green sheets **61.**

The conductive paste is printed onto ceramic green sheets **61** to obtain, as shown in FIGS. **4(b)** and **4(c),** a ceramic green sheet (first ceramic green sheet) **71** on which conductive paste patterns **31'** for radiation conductors are disposed, and a ceramic green sheet (second ceramic green sheet) **72** on which a conductive paste pattern **32'** for a ground conductor is disposed. In addition, as shown in FIG. **4(d),** according to a circuit that is to be configured in the co-fired ceramic substrate **101,** via holes **62** are formed in a plurality of ceramic green sheets **61** using a laser, a mechanical puncher, or the like, and each via hole is filled with a conductive paste **34'** using screen printing. The conductive paste is printed onto the ceramic green sheets by screen printing or the like to obtain ceramic green sheets **74** on which a conductive paste pattern **35'** for an interconnection pattern and a conductive paste pattern **33'** for a passive component pattern are disposed.

As shown in FIG. **4(e),** through openings **15'** corresponding to the hollow spaces **15** are formed in a ceramic green sheet **61** using a laser, a mechanical puncher, or the like. The through openings **15'** are larger than the conductive paste patterns **31'** for the radiation conductors.

A paste containing particles of an organic resin is prepared for filling the through openings **15'.** A paste is formulated by mixing particles of an organic resin, a binder, and a solvent together. As the particles of an organic resin, for example, solid, hollow, or porous particles of an acrylic resin such as polymethyl methacrylate, an organic resin that have an average particle size of not less than 1 $\mu$m and not more than 30 $\mu$m. Here, the average particle size refers to a D50 value that is calculated from a particle size distribution measured by a laser diffraction/scattering method. Such particles of an organic resin are commercially available for applications such as a pore-forming material for ceramic filters, etc., and an organic light-weight filler requiring strength. Thermally expandable microcapsules may be used. A thermally expandable microcapsule has a structure in which a low-boiling-point hydrocarbon is covered by a thermoplastic polymer shell, and when the thermally expandable microcapsule is heated, the polymer shell softens and the low-boiling-point hydrocarbon vaporizes, so that the thermally expandable microcapsule expands. In the case where thermally expandable microcapsules are used, the thermally expandable microcapsules are preferably expanded in advance by a thermal treatment. This is because deformation of the through openings **15'** is inhibited that would otherwise occur due to expansion of the thermally expandable microcapsules in a debinding step or the like after a green sheet laminate is formed. As the binder and the solvent, a binder and solvent that are commonly used in production of a co-fired ceramic substrate can be used.

The through openings **15'** of the ceramic green sheet **61** are filled with the prepared paste containing the particles of an organic resin by printing or the like, to obtain a ceramic green sheet (third ceramic green sheet) **73** in which the through openings **15'** are filled with the paste **63** containing the particles of an organic resin.

(2) Step (B) of Obtaining Green Sheet Laminate

The prepared ceramic green sheets **71, 72, 73, 74** are stacked together. As shown in FIG. **4(f),** initially, the plurality of ceramic green sheets **74** are stacked together while being temporarily joined together by pressing so as to configure a predetermined interconnection circuit. Thereafter, stacking is performed such that the ceramic green sheet **73** is positioned between the ceramic green sheet **71** and the ceramic green sheet **72**. Specifically, the ceramic green sheet **72** is disposed on the plurality of ceramic green sheets **74,** and the ceramic green sheet **73** is disposed on the ceramic green sheet **72**. A plurality of the ceramic green sheets **73** may be disposed, depending on the height of the hollow spaces **15** that are to be formed. Thereafter, the ceramic green sheet **71** is disposed on the ceramic green sheet **73.** Positioning is performed such that the conductive paste patterns **31'** for the radiation conductors of the ceramic green sheet **71** are positioned in regions above or below the through openings **15'** of the ceramic green sheet **73,** and the ceramic green sheet **73** is positioned between the ceramic green sheet **71** and the ceramic green sheet **72**. Thus, a green sheet laminate **75** is obtained.

Note that in FIG. **4,** regions in which the hollow spaces **15** are to be formed are formed in the single ceramic green sheet **73,** which is not necessarily limiting. For example, a plurality of the ceramic green sheets **73** can also be prepared and stacked, so that multiple through openings **15'** and pastes **63** are stacked together, to form single hollow spaces **15** having an increased height.

Next, the plurality of ceramic green sheets **71-74** of the green sheet laminate **75** are joined together by pressing. For example, the green sheet laminate **75** is mounted in a frame, and is fully joined together by pressing using a cold isostatic pressing (CIP) device or the like.

(3) Step (C) of Firing Green Sheet Laminate

Initially, debinding is performed. Specifically, organic components such as a resin and a solvent that are contained in the green sheet laminate **75** are removed by heating. In this step, the paste **63** filling the through openings **15'** that are to form the hollow spaces **15** is also removed. For example, maintenance is performed at a temperature in the range of not lower than 200°C and not higher than 600°C for a period of time of not shorter than 120 min and not longer than 600 min. The maintenance temperature may be constant or variable. This step causes the resin and solvent contained in the green sheet laminate **75** to disappear (evaporate). The particles of an organic resin in the paste **63** disappear at a temperature in the range of, for example, about 350°C to about 600°C. In the typical debinding step in the multilayer ceramic substrate production process, the conductive paste in the conductive patterns interposed between the ceramic green sheets and the conductive paste filling the via holes of the ceramic green sheets can be removed, and likewise, the paste **63** surrounded by the ceramic green sheets is removed in the form of gas. The through openings **15'** from which the paste **63** was removed are filled with the atmosphere or a gas included in an ambient gas during the debinding or firing.

Next, the green sheet laminate **75** after the debinding is fired. Specifically, the green sheet laminate **75** is maintained at a firing temperature for a ceramic contained in the ceramic green sheets, so that the ceramic is fired. For example, the maintenance is, for example, performed at a temperature in the range of not lower than 850°C and not higher than 940°C for a period of time of not shorter than 100 min and not longer than 180 min.

As shown in FIG. **1(c),** after the firing, the electrodes **21, 22, 23** are disposed on the lower surface **10b** to obtain the co-fired ceramic substrate **101.**

The co-fired ceramic substrate of this embodiment is provided with an interconnection circuit, passive component, and planar antenna for quasi-microwave/centimeter wave/quasi-millimeter wave/millimeter wave radio communication. Therefore, by mounting a chip set for quasi-microwave/centimeter wave/quasi-millimeter wave/millimeter wave radio communication on the co-fired ceramic substrate, a radio communication module with an antenna is implemented. For example, in the case of carrier waves of 24 GHz or more, a rectangular radiation conductor has a size of 6 mm × 6 mm or less, and can be preferably disposed in a radio communication module including the co-fired ceramic substrate.

In addition, the hollow spaces are provided between the radiation conductors **31** and the ground conductor **32,** and therefore, the effective relative dielectric constant in the planar antenna can be reduced, so that the loss caused by the dielectric material can be inhibited, and therefore, the radiation efficiency of the planar antenna can be improved. In addition, by changing the height of the hollow spaces **15,** the effective relative dielectric constant in the planar antenna can be changed. Therefore, even when the same ceramic material is used, planar antennas having different characteristics can be implemented by changing the relative dielectric constant.

In addition, according to the production method for the co-fired ceramic substrate of this embodiment, the through openings that are to form the hollow spaces are filled with a paste containing particles of an organic resin to produce the green sheet laminate **75.** Therefore, the co-fired ceramic substrate having the hollow spaces can be obtained without deformation of the through openings or reduction of the spaces due to pressure joining or the like.

Note that the shapes, numbers, arrangements of the radiation conductors **31** and the ground conductor **32** of the planar antenna described in this embodiment are merely schematic examples. For example, a portion of the plurality of radiation conductors may be disposed at an interface between ceramic layers that is positioned at a different distance from the ground conductor **32.** In addition, a slot may be provided in the radiation conductors. In addition, the planar antenna may further include a conductor to which power is not supplied, in addition to the radiation conductors, and such a conductor and the radiation conductors may be stacked together with a ceramic layer interposed therebetween.

(Second Embodiment)

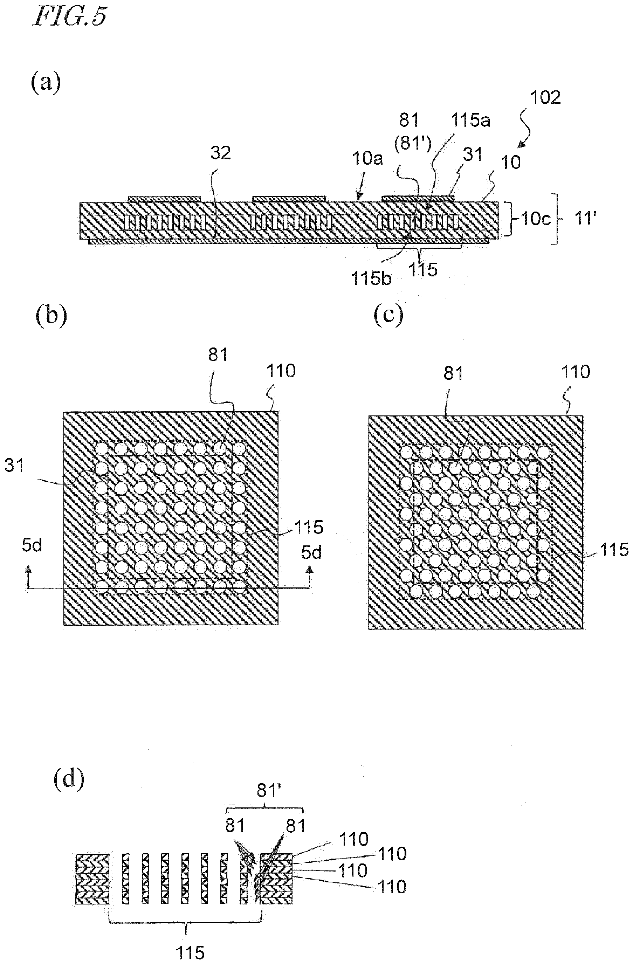

A second embodiment of a planar antenna and a co-fired ceramic substrate will be described. FIG. **5(a)** is a schematic cross-sectional view of a planar antenna **11'** of a co-fired ceramic substrate **102** according to the second embodiment of the present disclosure. The planar antenna **11'** is different from the planar antenna **11** of the co-fired ceramic substrate **101** of the first embodiment in that low-dielectric-constant regions **115** are provided, instead of the hollow spaces, in the multilayer ceramic body **10** between the radiation conductors **31** and the ground conductor **32.** For example, an interconnection circuit **12** of the co-fired ceramic substrate **102** has the same structure as that of the interconnection circuit **12** of the co-fired ceramic substrate **101** of the first embodiment. In FIG. **5(a),** the interconnection circuit **12** is not shown. For example, the positions, structure, etc., of the radiation conductors **31** and the ground conductor **32** of the planar antenna **11'** are the same as those of the planar antenna **11** described in the first embodiment. Therefore, in this embodiment, the structure of the low-dielectric-constant regions **115** will be mainly described.

The low-dielectric-constant regions **115** are positioned between the radiation conductors **31** and the ground conductor **32** in the multilayer ceramic body **10.** In the multilayer ceramic body **10,** the low-dielectric-constant region **115** includes a plurality of hollow portions, and has a relative dielectric constant lower than those of the other regions. The hollow portions are not filled with the ceramic material contained in the multilayer ceramic body **10** or any other solid or liquid material.

In the example of FIG. **5(a),** the low-dielectric-constant region **115** includes through holes **81** as the hollow portions. FIG. **5(b)** is a top view of the low-dielectric-constant region **115** positioned in the multilayer ceramic body **10,** and FIG. **5(d)** is a cross-sectional view of the low-dielectric-constant region **115** taken along line **5d-5d** of FIG. **5(b).** The multilayer ceramic body **10** includes a plurality of ceramic layers **110** corresponding to ceramic green sheets that were stacked during production, and the through holes **81** are provided in at least one of the ceramic layers **110.** As described above, the through holes **81** are not filled with the ceramic material contained in the multilayer ceramic body **10** or any other solid or liquid material. The through holes **81** are filled with the atmosphere or a gas filling an ambient gas during firing.

In this embodiment, in a plane perpendicular to the stacking direction of the ceramic layers **110,** the plurality of through holes **81** are two-dimensionally arranged in two directions, for example, two orthogonal directions. As shown in FIG. **5(c),** the plurality of through holes **81** may be provided in a staggered arrangement in each ceramic layer **110.** As shown in FIG. **5(d),** for example, the plurality of ceramic layers **110** are adjacent to each other, and the plurality of through holes **81** of two or more adjacent ones of the ceramic layers **110** are aligned in the stacking direction of the ceramic layers **110.** In other words, the through holes **81** of the ceramic layers **110** are connected together in the stacking direction of the ceramic layers **110** to form long through holes **81'.** For example, the through holes **81'** have an opening at an upper surface **115a** and a lower surface **115b** of the low-dielectric-constant region **115.**

The number and size (diameter) of the through holes **81** may be arbitrarily determined, based on the relative dielectric constant required for the low-dielectric-constant region **115.** The relative dielectric constant $\varepsilon_r$ of the low-dielectric-constant region **115** can be determined by:

$$\varepsilon_r = 1 \times v_h + \varepsilon_{rc} \times (1 - v_h)$$

where $\varepsilon_r$ represents the relative dielectric constant of the low-dielectric-constant region **115,** $\varepsilon_{rc}$ represents the relative dielectric constant of the ceramic material of the multilayer ceramic body **10,** the relative dielectric constant of air is 1,

and $v_h$ represents the volume ratio of the through holes **81'** in the low-dielectric-constant region **115**.

Note that an effective volume ratio (or also simply referred to as a "volume ratio") is represented by:

$$\text{the effective volume ratio = the volume (total) of the vias in the low-dielectric-constant region/the volume of the dielectric material in the low-dielectric-constant region.}$$

The low-dielectric-constant region is a region that surrounds the through holes (vias) **81,** in the case of FIG. **5,** and is indicated by the reference numeral **115**. The volume (total) of the vias is equivalent to the total of the volumes of the through holes. The addition of the volume (total) of the vias in the low-dielectric-constant region and the volume of the dielectric material in the low-dielectric-constant region is equivalent to the volume of the low-dielectric-constant region.

The low-dielectric-constant region **115** of the multilayer ceramic body **10** includes the plurality of through holes **81** that are not filled with a solid such as a ceramic material, and therefore, has a small relative dielectric constant compared to when the entire low-dielectric-constant region **115** is formed of a ceramic material. Therefore, as in the first embodiment, the effective relative dielectric constant of the planar antenna can be reduced, so that the loss caused by the dielectric material can be inhibited, and therefore, the radiation efficiency of the planar antenna can be improved. In addition, by changing the number and size of the through holes **81,** the relative dielectric constant of the low-dielectric-constant region **115** can be adjusted. Thus, the design flexibility of the planar antenna can be improved.

Furthermore, in the low-dielectric-constant region **115,** the ceramic material is present around the through holes **81** to serve as a structural member for supporting the perimeters of the through holes **81**. This inhibits deformation of the multilayer ceramic body **10** caused by its non-uniform shrinkage during firing. In addition, the ceramic material present around the through holes **81** inhibits a reduction in structural strength.

The co-fired ceramic substrate **102** can be produced using a method similar to that for the co-fired ceramic substrate **101** of the first embodiment. Specifically, in the production method of the first embodiment (see FIG. **4(d)),** a ceramic green sheet having holes corresponding to the plurality of through holes **81** may be used instead of the ceramic green sheet **73** in which the through openings **15'** are filled with the paste **63**. In this case, the holes may or may not be filled with the paste **63** containing particles of an organic resin. The holes corresponding to the plurality of through holes **81** may be formed by punching working or laser working.

In the case where the paste **63** is used, the co-fired ceramic substrate **102** can be produced using, for example, the following method. Although, in the description that follows, only the low-dielectric-constant region **115** will be described, the entire co-fired ceramic substrate **102** can be produced using a method similar to that for the co-fired ceramic substrate **101** of the first embodiment.

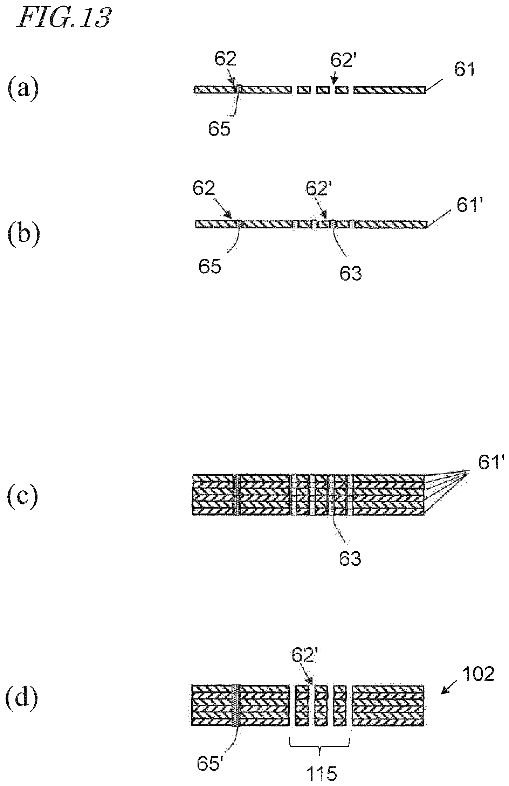

Initially, as shown in FIG. **13(a),** a ceramic green sheet **61** is prepared. In the case where conductive vias and conductive patterns are formed in the same layer in which the low-dielectric-constant region **115** is provided, for example, through holes **62** are formed in the ceramic green sheet **61,** and are filled with a conductive paste **65** for conductive vias and conductive patterns. Thereafter, a plurality of through holes **62'** are formed in a region of the ceramic green sheet **61** that is to be the low-dielectric-constant region **115**. Thereafter, as shown in FIG. **13(b),** the through holes **62'** of the ceramic green sheet **61** are filled with a paste **63** containing an organic resin. For example, the plurality of through holes **62'** are filled with the paste **63** using a printing method.

Next, as shown in FIG. **13(c),** the ceramic green sheets **61'** filled with the paste **63** are stacked together, and joined together by pressing. Thereafter, the laminate of the ceramic green sheets **61'** is heated at a high temperature so that the ceramic green sheets **61'** are sintered. At this time, an organic resin and a solvent, etc., contained in the paste **63** disappear due to heat. Thus, as shown in FIG. **13(d),** the co-fired ceramic substrate **102** having conductive vias **65'** and the low-dielectric-constant region **115** is obtained. The through holes **62'** after the firing are equivalent to the through holes **81**. With this production method, the through holes **62'** are filled with the paste **63,** and therefore, when the ceramic green sheets are stacked together and joined together by pressing, the shapes of the through holes **62'** are less likely to be deformed, and therefore, misalignment of the ceramic green sheets during stacking is inhibited, so that variations in shape and performance during production are inhibited. As a result, the co-fired ceramic substrate **102** meeting its specification can be obtained.

Note that in the case where the through holes **62'** are filled with the paste **63,** the through holes **81** after the firing preferably have a diameter of, for example, about 0.12 mm to about 0.15 mm. If the diameter of the through holes **81** is less than 0.12 mm, it is difficult to place the paste **63** only in the through holes **62',** and the paste **63** is more likely to spread. If the diameter of the through holes **81** is more than 0.15 mm, for example, it is difficult to efficiently form the through holes **63** using laser. In addition, the through holes **62'** that are to be a cavity have a larger region, and therefore, the mechanical strength of the co-fired ceramic substrate **102** in the low-dielectric-constant region **115** is likely to decrease.

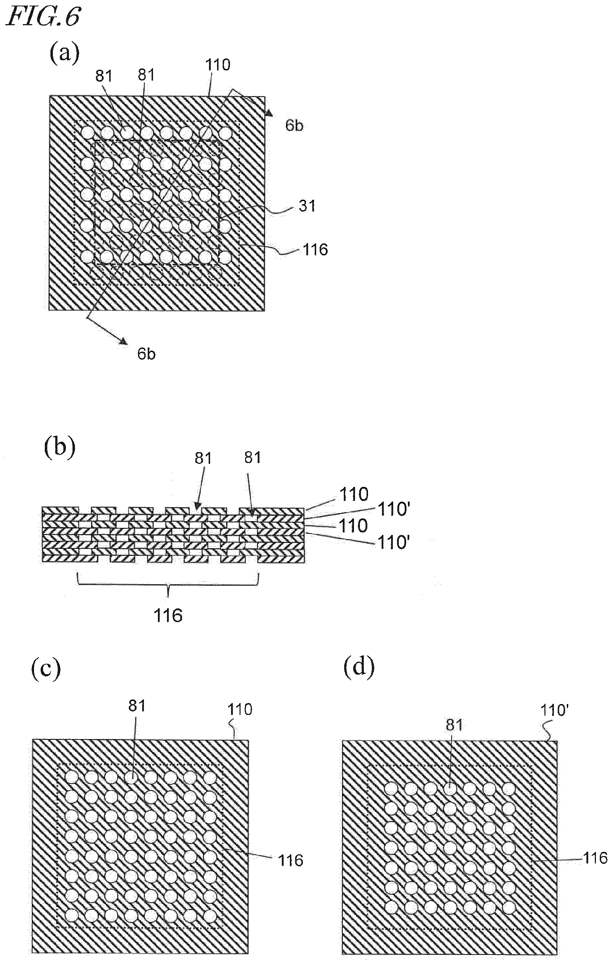

The plurality of through holes **81** may be arranged in other patterns in the low-dielectric-constant region **115**. FIG. **6(a)** is a top view of a low-dielectric-constant region **116** of the multilayer ceramic body **10,** and FIG. **6(b)** is a cross-sectional view of the low-dielectric-constant region **116** taken along line **6b-6b** of FIG. **6(a).** In the form shown in FIG. **6,** in the low-dielectric-constant region **116,** the positions of the through holes **81** are different between two adjacent ceramic layers in the plurality of ceramic layers. For example, in the odd-numbered ceramic layers **110** of the plurality of ceramic layers, the plurality of through holes **81** are arranged at positions indicated by a solid line, and in the even-numbered ceramic layers **110',** the plurality of through holes **81** are arranged at positions indicated by a dotted line. More specifically, the plurality of through holes **81** in the even-numbered ceramic layers **110'** are each disposed at a center of four of the through holes **81** in the odd-numbered ceramic layers **110** so as not to overlap the through holes **81** in the odd-numbered ceramic layers **110.** For example, ceramic layers **110** and **110'** shown in FIGS. **6(c)** and **6(d)** are alternately stacked.

In the low-dielectric-constant region **116,** the plurality of through holes **81** are arranged in a more distributed fashion. Therefore, the uniformity of the relative dielectric constant in the low-dielectric-constant region **116** is increased. The through holes **81,** serving as hollow portions, are also distributed, so that structural strength in the low-dielectric-constant region **116** is more uniform, and therefore, the reduction in deformation and structural strength due to firing is further inhibited.

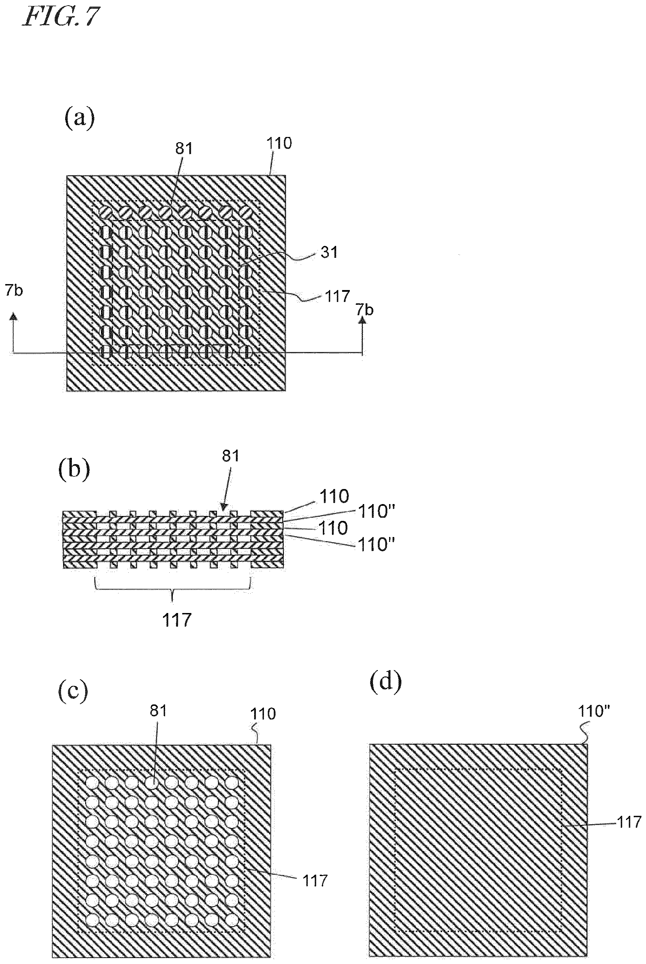

FIG. **7(a)** is a top view of a low-dielectric-constant region **117** of the multilayer ceramic body **10,** and FIG. **7(b)** is a cross-sectional view of the low-dielectric-constant region **117** taken along line **7b-7b** of FIG. **7(a).** In the form of FIG. **7,** in the low-dielectric-constant region **117,** a ceramic layer in which a through hole is not formed is positioned between a plurality of ceramic layers. In the form of FIG. **7,** for example, in odd-numbered ceramic layers **110** of the plurality of ceramic layers, a plurality of through holes **81** are disposed, and in even-numbered ceramic layers **110',** a through hole **81** is not disposed. More specifically, ceramic layers **110** and ceramic layers **110"** of FIGS. **7(c)** and **7(d)** are alternately stacked. In the above embodiment, in the low-dielectric-constant region of the multilayer ceramic body, through holes penetrating through the ceramic layers are provided as the hollow portions. Alternatively, the hollow portions may have a plurality of hollow portions that do not penetrate through the ceramic layers.

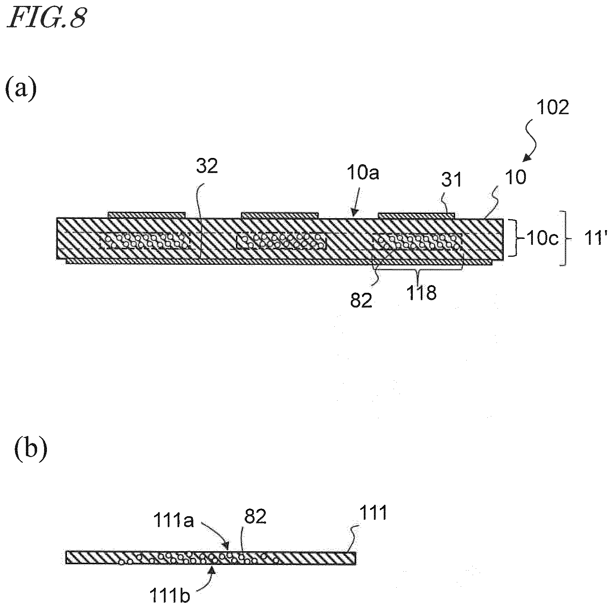

FIG. **8(a)** shows a cross-section of a planar antenna **11'** of a co-fired ceramic substrate **102** including a low-dielectric-constant region **118** having a plurality of hollow portions **82** that do not penetrate through a ceramic layer. FIG. **8(b)** shows a cross-section of one ceramic layer **111** included in the low-dielectric-constant region **118** of the multilayer ceramic body **10.**

As described above, in the low-dielectric-constant region **118,** the hollow portions **82** are provided in one or more ceramic layers **111** of the plurality of ceramic layers. The hollow portions **82** are a space that does not penetrate through a ceramic layer **111.** For example, the hollow portion **82** is not a through hole that has an opening simultaneously at an upper surface **111a** and a lower surface **111b** of a ceramic layer **111,** and is a space enclosed in a ceramic layer **111** or a recessed portion that has an opening at one of the upper surface **111a** and the lower surface **111b** of a ceramic layer **111.** Such a hollow portion **82** can, for example, be formed by distributing, in a ceramic green sheet, microcapsules or the like that have a diameter smaller than the thickness of the ceramic green sheet and is formed of an organic material, and causing the microcapsules or the like to disappear during a debinding step or a firing step.

The relative dielectric constant of such a low-dielectric-constant region **118** can be relatively easily adjusted by changing the proportion of the hollow portions **82** in the low-dielectric-constant region **118.** For example, the relative dielectric constant of the low-dielectric-constant region **118** can be adjusted only by changing the amount of microcapsules added to a ceramic slurry for forming a ceramic green sheet.

In this embodiment, the cross-section shown of the through hole is not limited to a circle and may be an ellipse, a polygon, or the like. In addition, the number of ceramic layers in which the low-dielectric-constant regions **115, 116, 117,** and **118** are formed can be arbitrarily set. Furthermore, in the forms of FIGS. **6** and **7,** the ceramic layers **110** and the ceramic layers **110',** and the ceramic layers **110** and the ceramic layers **110",** may not alternately be stacked, and may be stacked in groups of two or more, or may be stacked randomly.

In addition, the hollow portions may be arranged at regular intervals or at irregular intervals in a top view the low-dielectric-constant region. Furthermore, the hollow portions may not uniformly be distributed in the low-dielectric-constant region in a top view. For example, in a top view, the relative dielectric constant in the low-dielectric-constant region can be allowed to have a distribution by changing the proportion of the area of the hollow portions in the vicinity of the center of the low-dielectric-constant region to the area of the hollow portions in the vicinity of the periphery of the low-dielectric-constant region.

(Third Embodiment)

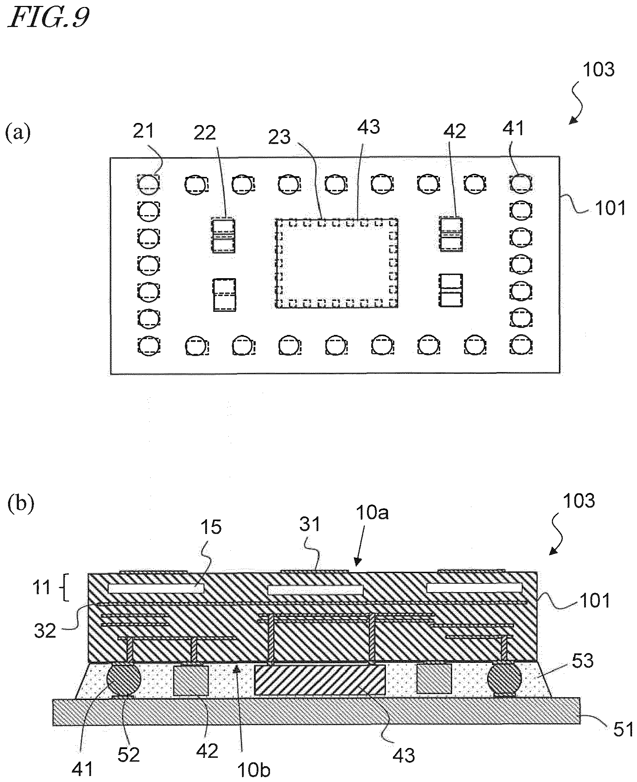

An embodiment of a quasi-microwave/centimeter wave/quasi-millimeter wave/millimeter wave radio communication module will be described. FIG. **9(a)** is a schematic bottom view showing an embodiment of a radio communication module according to the present disclosure, and FIG. **9(b)** is a schematic cross-sectional view showing the radio communication module mounted on a substrate. The radio communication module **103** includes the co-fired ceramic substrate **101** of the first embodiment, solder bumps **41,** a passive component **42,** and an active component **43.** The solder bumps **41** are provided at the electrodes **21** positioned on the lower surface **10b** of the co-fired ceramic substrate **101.** The passive component **42** is, for example, a chip capacitor, a chip inductor, a chip resistor, or the like, and is joined to the electrode **22** by solder or the like. The active component **43** is, for example, a chip set for radio communication, includes a receiver circuit, a transmitter circuit, an A/D converter, a D/A converter, a base-band processor, a media access controller, and the like, and is joined to the electrode **23** by solder or the like.

The radio communication module **103** is, for example, joined to a circuit substrate **51** on which an electrode 52 is provided, by flip chip bonding, with the radio communication module **103** facing down, i.e. the passive component **42** and the active component **43** facing the circuit substrate **51.** A space between the co-fired ceramic substrate **101** and the circuit substrate **51** is filled with, for example, a molding resin **53.**

In the radio communication module **103** mounted on the circuit substrate **51,** the upper surface **10a** of the co-fired ceramic substrate **101** is positioned on the opposite side from the circuit substrate **51.** Therefore, quasi-microwave/centimeter wave/quasi-millimeter wave/millimeter wave band radio waves can be radiated from the planar antenna **11,** and quasi-microwave/centimeter wave/quasi-millimeter wave/millimeter wave band radio waves coming from the outside can be received by the planar antenna **11,** without an influence of the passive component **42** and the active component **43,** or the circuit substrate **51.** In addition, the planar antenna **11** includes the hollow spaces **15,** and therefore, although the planar antenna **11** is provided in the co-fired ceramic substrate, the planar antenna **11** has a small effective relative dielectric constant, and can achieve high radiation efficiency. Therefore, a small and surface-mountable radio communication module can be achieved which includes an antenna capable of transmitting and receiving radio waves with high radiation efficiency.

In this embodiment, the radio communication module **103** including the co-fired ceramic substrate **101** of the first embodiment has been described. Alternatively, the radio communication module may include the co-fired ceramic substrate **102** of the second embodiment.

(Experimental Examples)

[Experimental Example 1]

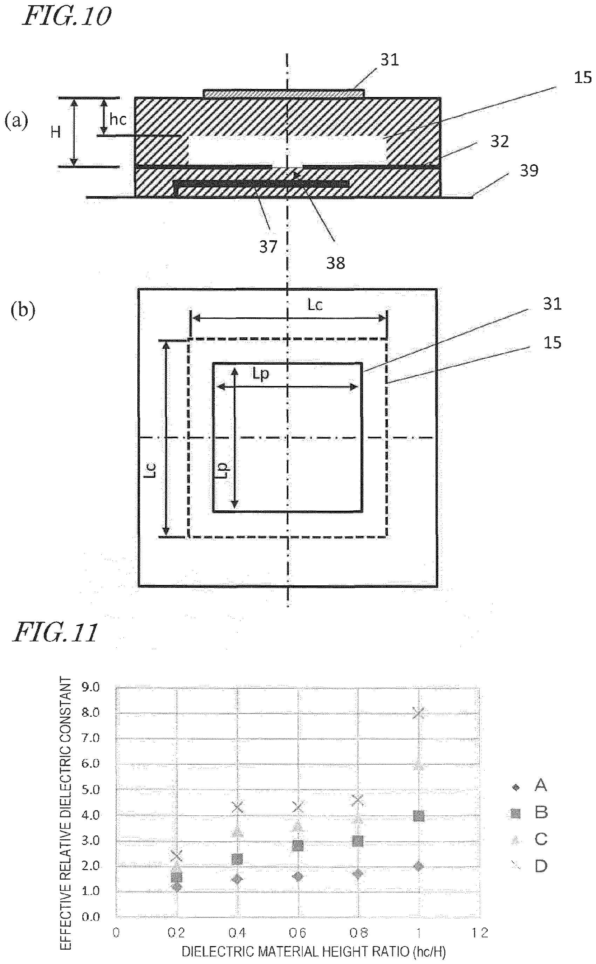

It was confirmed, by calculation, that the effective relative dielectric constant can be controlled by the hollow spaces. The effective relative dielectric constant was calculated using a planar antenna having a shape shown in FIG. **10.** A model was used in which as shown in FIG. **10,** a slot **38** is provided in the ground conductor **32** that is in contact with the hollow space, and power is supplied from a microstrip line including a power supply line **37** and a grounded conductor **39,** through the slot **38,** to the radiation conductor **31.** H = 0.4 mm, Lc/Lp = 2, and the value of hc was varied. The relative dielectric constants of materials A-D for the multilayer ceramic were set to 2, 4, 6, 8. The results are shown in FIG. **11.** In FIG. **11,** the horizontal axis represents the value of hc/H, and the vertical axis represents the effective relative dielectric constant.

In the case where hc/H = 1, there is no hollow space. For any of the materials A to D for the multilayer ceramic body **10,** the effective relative dielectric constant significantly decreases in the case where hc/H is less than 1. In particular, as the relative dielectric constant of the material for the multilayer ceramic body **10** increases, the effective relative dielectric constant decreases. In the case where hc/H is in the range of 0.4-0.8, changes in the value of the effective relative dielectric constant are small.

Specifically, in the case where hc/H is in the range of 0.4-0.8, the effective relative dielectric constant is in the range of 1.5-1.7 for the material A (relative dielectric constant: 2), and the effective relative dielectric constant is in the range of 4.3-4.6 for the material D (relative dielectric constant: 8).

These results demonstrated that the presence of the hollow spaces has the effect of significantly reducing the relative dielectric constant of the material of the multilayer ceramic body **10,** and that as hc/H decreases, the effective relative dielectric constant also decreases.

[Experimental Example 2]

The effective relative dielectric constant was confirmed by calculation for different structures of the planar antenna. The two-dimensional shapes of the radiation conductors **31,** the ground conductor **32,** and the hollow spaces **15** are the same as those of Experimental Example 1, and radiation efficiency was determined by calculation for the structures of FIGS. **3(a), 3(b), 3(d).** H, h1, h2 shown in the figures are as described below. Calculation was performed, assuming that the thicknesses of the radiation conductor **31** and the ground conductor **32** are zero. In addition, the relative dielectric constant of the material for the multilayer ceramic was set to 6.

H: 0.4 mm
h1: 0.16 mm
h2: 0.08 mm

The results are shown in Table 1.

[Table 1]

| Sample no. | Structural model | Effective relative dielectric constant |
|:---:|:---:|:---:|
| 1 | FIG. **3(b),** (h1) | 3.4 |
| 2 | FIG. **3(b),** (h2) | 2.0 |
| 3 | FIG. **3(d)** | 2.2 |
| 4 | FIG. **3(a)** | 4.9 |

As can be shown from Table 1, even when a multilayer ceramic having the same relative dielectric constant is used, the effective relative dielectric constant can be changed by changing the positions of the radiation conductor **31,** the ground conductor **32,** and the hollow space **15.** Therefore, the radiation efficiency, band, and gain of an antenna can be increased, and characteristics of an antenna can be adjusted by changing the effective relative dielectric constant, depending on the purpose and specification.

[Experimental Example 3]

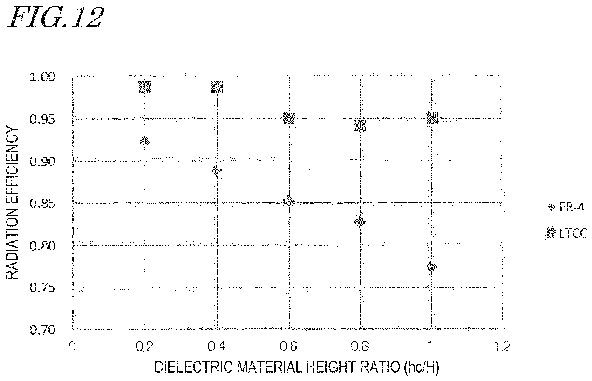

Radiation efficiency was determined by calculation, where as the dielectric material, the physical properties of a low-temperature co-fired ceramic (LTCC) and a glass epoxy (FR-4) were used, and the height of the hollow space was changed as in Experimental Example 1. In the calculation, the values of the relative dielectric constant and $\tan\delta$ shown in Table 2 were used. The results are shown in FIG. **12.**

[Table 2]

| Material | Relative dielectric constant | $\mathrm{Tan}\delta$ |
|:---:|:---:|:---:|
| Glass epoxy (FR-4) | 4 | $10^{-2}$ |
| Ceramic (LTCC) | 6 | $10^{-4}$ |

As can be seen from FIG. **12,** for any of a planar antenna employing the glass epoxy as the dielectric material and a planar antenna employing the low-temperature co-fired ceramic as the dielectric material, as hc/H decreases, the radiation efficiency increases. However, the change in the radiation efficiency varies depending on the dielectric material. Specifically, for the planar antenna employing the glass epoxy as the dielectric material, as the height of the hollow space decreases, and therefore, the height ratio hc/H of the dielectric material increases, the radiation efficiency significantly decreases. In contrast to this, for the planar antenna employing the low-temperature co-fired ceramic as the dielectric material, even when the height ratio of the dielectric material increases, the radiation efficiency does not decrease very much. This may be because while for any of the ceramic and the glass epoxy, the $\tan\delta$ of the hollow space is zero, the $\tan\delta$ of the glass epoxy is greater than that of the ceramic, and therefore, as the height ratio of the dielectric material increases, the loss $\alpha$ due to $\tan\delta$ increases, so that the radiation efficiency decreases. Thus, it is understood that the planar antenna of the present disclosure has high radiation efficiency, particularly in the case where a ceramic is used as the dielectric material.

[Experimental Example 4]

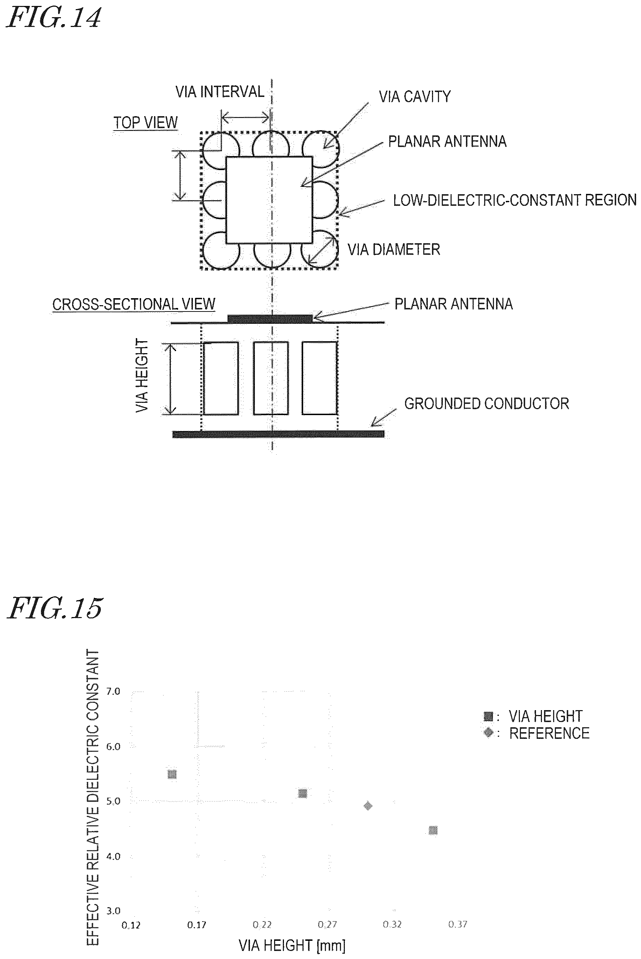

In the co-fired ceramic substrate of the second embodiment, a relationship between the shape and arrangement of the hollow portions and the effective relative dielectric constant of the low-dielectric-constant region was determined by calculation. Using a structure shown in FIG. **14,** cylindrical via cavities were set as hollow portions, and a relationship between the height, interval, and diameter of the via cavities and the effective relative dielectric constant was determined. The calculation was performed, assuming that the relative dielectric constant of the dielectric material is 6. FIGS. **15, 16,** and **17** show a relationship between the via height, via interval, and via diameter and the effective relative dielectric constant. As the via height and via diameter (via size) increase, the volume of the hollow portion increases, and therefore, the effective relative dielectric constant tends to decrease. Meanwhile, as the via interval increases, the volume of the dielectric material portion increases, and therefore, the effective relative dielectric constant tends to increase.

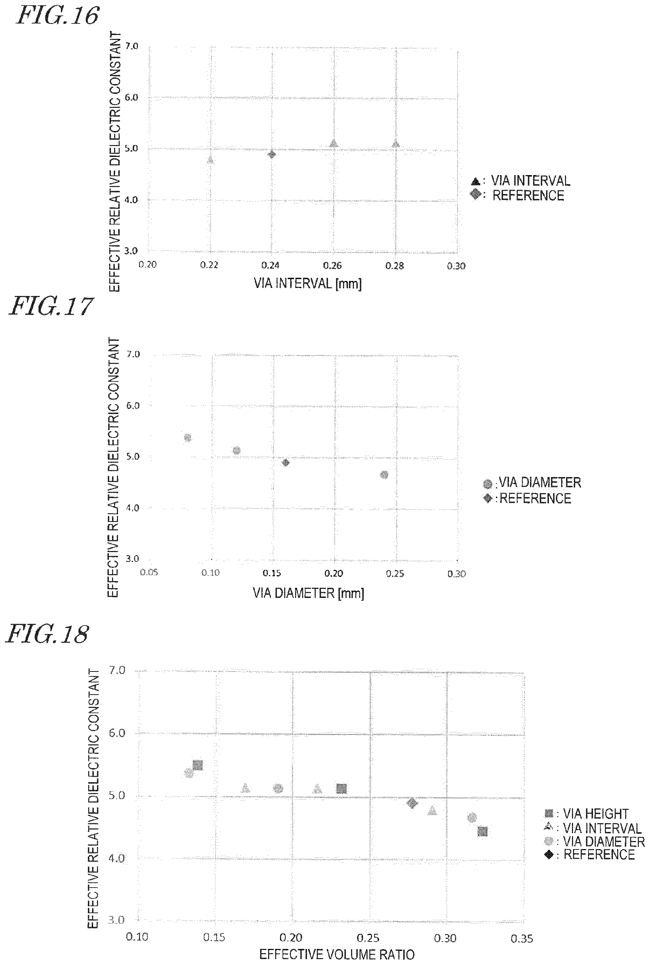

FIG. **18** shows a relationship between the effective volume ratio and the effective relative dielectric constant, indicating the result of determination of the effective relative dielectric constant by changing the via height, via interval, and via diameter. As shown in FIG. **18,** as the effective volume ratio of the hollow portion increases, the effective relative dielectric constant decreases, irrespective of the shape of the hollow portions.

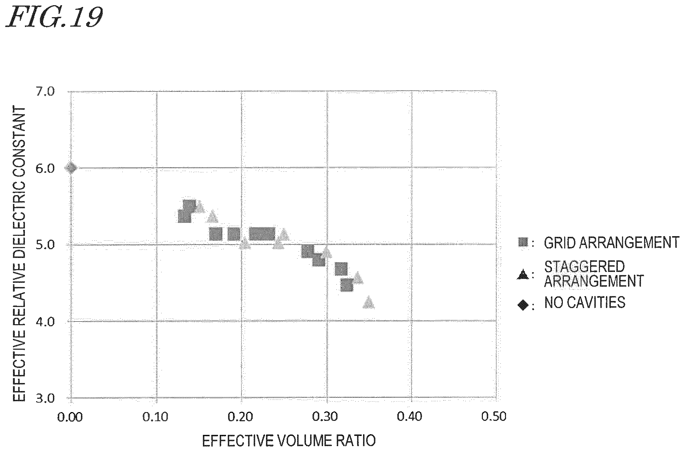

FIG. **19** shows a relationship between the effective volume ratio and the effective relative dielectric constant, indicating the result of determination of the effective relative dielectric constant by changing the size of the hollow portions in the case where the hollow portions were arranged in a grid pattern (FIG. **5**) and in the case where the hollow portions were arranged in a staggered pattern (FIG. **6**). As the effective volume ratio of the hollow portions increases, the effective relative dielectric constant decreases, irrespective of the difference between the arrangement patterns of the hollow portions.

These results demonstrated that the effective relative dielectric constant of the low-dielectric-constant region can be adjusted by arranging the hollow portions of various sizes in various arrangement patterns in the low-dielectric-constant region.

## INDUSTRIAL APPLICABILITY

The planar antenna, co-fired ceramic substrate, and quasi-microwave/centimeter wave/quasi-millimeter wave/millimeter wave radio communication module of the present disclosure can be preferably used in various high-frequency radio communication antennas and radio communication circuits including the antennas, and is preferably useful for particularly in quasi-millimeter wave/millimeter wave band radio communication.

## REFERENCE SIGNS LIST

| | |
|---|---|
| **10** | multilayer ceramic body |
| **10a** | upper surface |
| **10b** | lower surface |
| **10c** | first portion |
| **10d** | second portion |
| **11, 11'** | planar antenna |
| **12** | interconnection circuit |
| **15** | hollow space |
| **15'** | through opening |
| **15a** | upper surface |
| **15b** | lower surface |
| **21, 22, 23** | electrode |
| **31** | radiation conductor |
| **31', 32', 33', 35'** | conductive paste pattern |
| **32** | ground conductor |
| **33** | passive component pattern |
| **34** | conductive via |
| **34'** | conductive paste |
| **35** | interconnection pattern |
| **37** | power supply line |
| **38** | slot |
| **39** | grounded conductor |
| **41** | solder bump |
| **42** | passive component |
| **43** | active component |
| **51** | circuit substrate |
| **52** | electrode |
| **53** | molding resin |
| **60** | carrier film |
| **61** | ceramic green sheet |
| **62, 62'** | via hole (through hole) |

| 63 | paste |
| 65 | conductive paste |
| 65' | conductive via |
| 71, 72, 73, 74 | ceramic green sheet |
| 75 | green sheet laminate |
| 81, 81' | through hole |
| 82 | hollow portion |
| 101, 102 | co-fired ceramic substrate |
| 103 | radio communication module |
| 110, 110', 110", 111 | ceramic layer |
| 111a, 115a | upper surface |
| 111b, 115b | lower surface |
| 115, 116, 117, 118 | low-dielectric-constant region |

**Claims**

1. A planar antenna comprising:

   a multilayer ceramic body having an upper surface and a lower surface, and including a plurality of ceramic layers stacked together;
   at least one radiation conductor positioned at one of interfaces between the plurality of ceramic layers in the multilayer ceramic body or on the upper surface of the multilayer ceramic body;
   a ground conductor positioned at another one of the interfaces between the plurality of ceramic layers in the multilayer ceramic body or on the lower surface of the multilayer ceramic body; and
   a low-dielectric-constant region positioned in the multilayer ceramic body between the radiation conductor and the ground conductor, and having a plurality of hollow portions.

2. The planar antenna of claim 1, wherein in a top view the multilayer ceramic body, an outer edge of the low-dielectric-constant region surrounds the entire radiation conductor.

3. The planar antenna of claim 1, wherein in a top view the multilayer ceramic body, an outer edge of the ground conductor surrounds the entire radiation conductor.

4. The planar antenna of any of claims 1 to 3, wherein the radiation conductor is positioned on the upper surface of the multilayer ceramic body.

5. The planar antenna of any of claims 1 to 4, wherein the plurality of hollow portions are a plurality of through holes provided in at least one ceramic layer of the plurality of ceramic layers.

6. The planar antenna of any of claims 1 to 4, wherein the plurality of hollow portions are a plurality of through holes provided in each of two or more adjacent ceramic layers of the plurality of ceramic layers, and
   the plurality of through holes formed in the two or more respective ceramic layers are aligned in a stacking direction of the two or more ceramic layers.

7. The planar antenna of claim 6, wherein the plurality of through holes are arranged in two directions or in a staggered pattern in a plane perpendicular to the stacking direction.

8. The planar antenna of any of claims 1 to 4, wherein the plurality of hollow portions are a plurality of through holes provided in each of two or more adjacent ceramic layers of the plurality of ceramic layers, and positions of the plurality of through holes are different between two adjacent ceramic layers.

9. The planar antenna of any of claims 1 to 4, wherein the plurality of hollow portions are a plurality of through holes provided in each of two or more ceramic layers of the plurality of ceramic layers, and
   a ceramic layer in which a through hole is not formed is positioned between the two or more ceramic layers.

10. The planar antenna of any of claims 1 to 4, wherein the plurality of hollow portions are provided in at least one ceramic layer of the plurality of ceramic layer, and are a space that does not penetrate through the ceramic layer.

**11.** The planar antenna of any of claims 1 to 10, wherein there are a plurality of the radiation conductors.

**12.** A co-fired ceramic substrate comprising:

a multilayer ceramic body having an upper surface and a lower surface, and including a plurality of ceramic layers stacked together;

at least one radiation conductor positioned at one of interfaces between the plurality of ceramic layers in the multilayer ceramic body or on the upper surface of the multilayer ceramic body;

a ground conductor positioned at another one of the interfaces between the plurality of ceramic layers in the multilayer ceramic body or on the lower surface of the multilayer ceramic body;

a low-dielectric-constant region positioned in the multilayer ceramic body between the radiation conductor and the ground conductor, and having a plurality of hollow portions;

a plurality of conductor patterns positioned at another interface that is between the plurality of ceramic layers and is positioned closer the lower surface than is the radiation conductor; and

a plurality of conductive vias provided in a ceramic layer of the plurality of ceramic layer that is positioned closer to the lower surface than is the radiation conductor,

wherein the radiation conductor, the ground conductor, and a portion of the plurality of ceramic layers positioned between the radiation conductor and the ground conductor form a planar antenna, and

the plurality of conductor patterns and the plurality of conductive vias form a passive component and an interconnect.

**13.** The co-fired ceramic substrate of claim 12, wherein in a top view the multilayer ceramic body, an outer edge of the low-dielectric-constant region surrounds the entire radiation conductor.

**14.** The co-fired ceramic substrate of claim 12, wherein in a top view the multilayer ceramic body, an outer edge of the ground conductor surrounds the entire radiation conductor.

**15.** The co-fired ceramic substrate of any of claims 12 to 14, wherein the radiation conductor is positioned on the upper surface of the multilayer ceramic body.

**16.** The co-fired ceramic substrate of any of claims 12 to 15, wherein the plurality of hollow portions are a plurality of through holes provided in at least one ceramic layer of the plurality of ceramic layers.

**17.** The co-fired ceramic substrate of any of claims 12 to 15, wherein the plurality of hollow portions are a plurality of through holes provided in each of two or more adjacent ceramic layers of the plurality of ceramic layers, and the plurality of through holes formed in the two or more respective ceramic layers are aligned in a stacking direction of the two or more ceramic layers.

**18.** The co-fired ceramic substrate of claim 17, wherein the plurality of through holes are arranged in two directions or in a staggered pattern in a plane perpendicular to the stacking direction.

**19.** The co-fired ceramic substrate of any of claims 12 to 15, wherein the plurality of hollow portions are a plurality of through holes provided in each of two or more adjacent ceramic layers of the plurality of ceramic layers, and positions of the plurality of through holes are different between two adjacent ceramic layers.

**20.** The co-fired ceramic substrate of any of claims 12 to 15, wherein the plurality of hollow portions are a plurality of through holes provided in each of two or more ceramic layers of the plurality of ceramic layers, and a ceramic layer in which a through hole is not formed is positioned between the two or more ceramic layers.

**21.** The co-fired ceramic substrate of any of claims 12 to 15, wherein the plurality of hollow portions are provided in at least one ceramic layer of the plurality of ceramic layer, and are a space that does not penetrate through the ceramic layer.

**22.** A radio communication module comprising:

the co-fired ceramic substrate of any of claims 12 to 21; and

an active component coupled to the plurality of electrodes positioned on the lower surface of the multilayer ceramic body.

**23.** A method for producing a co-fired ceramic substrate, comprising:

a step (A) of preparing a plurality of ceramic green sheets including a first ceramic green sheet on which a conductive paste pattern of a radiation conductor is disposed, a second ceramic green sheet on which a conductive paste pattern of a ground conductor is disposed, and at least one third ceramic green sheet including a region in which a plurality of through holes are formed;
a step (B) of stacking the plurality of ceramic green sheets together and joining the plurality of ceramic green sheets together by pressing such that the conductive paste pattern of the radiation conductor of the first ceramic green sheet is positioned above or below the region of the at least one third ceramic green sheet, and the at least one third ceramic green sheet is positioned between the first ceramic green sheet and the second ceramic green sheet, to obtain a green sheet laminate; and
a step (C) of heating the green sheet laminate to sinter the green sheet laminate.

**24.** The method for producing a co-fired ceramic substrate of claim 23, further comprising:

a step of, between the step (A) and the step (B), filling the plurality of through holes of the at least one third ceramic green sheet with a paste containing an organic resin,
wherein in the step (C), the paste containing the organic resin is caused to disappear due to the heating.

**25.** A method for producing a co-fired ceramic substrate, comprising:

a step (A) of preparing a plurality of ceramic green sheets including a first ceramic green sheet on which a conductive paste pattern of a radiation conductor is disposed, a second ceramic green sheet on which a conductive paste pattern of a ground conductor is disposed, and at least one third ceramic green sheet including a region in which a plurality of microcapsules of an organic material are disposed;
a step (B) of stacking the plurality of ceramic green sheets together and joining the plurality of ceramic green sheets together by pressing such that the conductive paste pattern of the radiation conductor of the first ceramic green sheet is positioned above or below the region of the at least one third ceramic green sheet, and the at least one third ceramic green sheet is positioned between the first ceramic green sheet and the second ceramic green sheet, to obtain a green sheet laminate; and
a step (C) of heating the green sheet laminate to cause a binder and the microcapsules to disappear from the green sheet laminate, and sinter the green sheet laminate.

## FIG.1

(a)

(b)

(c)

*FIG.2*

EP 3 582 325 A1

*FIG.3*

22

*FIG.4*

(a)

(b)

(c)

(d)

(e)

(f)

*FIG.5*

(a)

(b)

(c)

(d)

*FIG.6*

(a)

(b)

(c)

(d)

*FIG.7*

(a)

(b)

(c)

(d)

*FIG.8*

(a)

(b)

**FIG.9**

(a)

(b)

## FIG.10

(a)

(b)

## FIG.11

## FIG.12

## FIG.13

(a)

62    62'    61

65

(b)

62    62'    61'

65    63

(c)

61'

63

(d)

62'    102

65'

115

*FIG.14*

*FIG.15*

*FIG.16*

*FIG.17*

*FIG.18*

FIG.19

## INTERNATIONAL SEARCH REPORT

| | International application No. |
|---|---|
| | PCT/JP2018/004443 |

| A. CLASSIFICATION OF SUBJECT MATTER |
|---|
| Int.Cl. H01Q13/08(2006.01)i, H01Q21/06(2006.01)i, H01Q23/00(2006.01)i |

According to International Patent Classification (IPC) or to both national classification and IPC

| B. FIELDS SEARCHED |
|---|
| Minimum documentation searched (classification system followed by classification symbols) |
| Int.Cl. H01Q13/08, H01Q21/06, H01Q23/00 |

Documentation searched other than minimum documentation to the extent that such documents are included in the fields searched

| | |
|---|---|
| Published examined utility model applications of Japan | 1922-1996 |
| Published unexamined utility model applications of Japan | 1971-2018 |
| Registered utility model specifications of Japan | 1996-2018 |
| Published registered utility model applications of Japan | 1994-2018 |

Electronic data base consulted during the international search (name of data base and, where practicable, search terms used)

| C. DOCUMENTS CONSIDERED TO BE RELEVANT |
|---|

| Category* | Citation of document, with indication, where appropriate, of the relevant passages | Relevant to claim No. |
|---|---|---|
| X<br>Y<br>A | JP 2014-011769 A (NITTO DENKO CORP.) 20 January 2014, paragraphs [0047]-[0062], [0137], [0148]-[0149], fig. 1 (Family: none) | 1-4, 10-15, 21-22<br>25<br>5-9, 16-20 |
| Y | JP 2003-327483 A (SEKISUI CHEMICAL CO., LTD.) 19 November 2003, claim 6 (Family: none) | |

☒ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 20 April 2018 (20.04.2018) | 01 May 2018 (01.05.2018) |

| Name and mailing address of the ISA/ | Authorized officer |
|---|---|
| Japan Patent Office<br>3-4-3, Kasumigaseki, Chiyoda-ku,<br>Tokyo 100-8915, Japan | |
| | Telephone No. |

Form PCT/ISA/210 (second sheet) (January 2015)

**INTERNATIONAL SEARCH REPORT**

| International application No. |
|---|
| PCT/JP2018/004443 |

C (Continuation).   DOCUMENTS CONSIDERED TO BE RELEVANT

| Category* | Citation of document, with indication, where appropriate, of the relevant passages | Relevant to claim No. |
|---|---|---|
| Y<br>A | JP 9-051224 A (NIPPON TELEGRAPH AND TELEPHONE CORP.) 18 February 1997, claim 14, paragraphs [0040]-[0043], [0049], fig. 7, 11 & US 6384785 B1, claim 14, column 10, line 48 to column 11, line 30, column 12, lines 8-20, fig. 7B, 11B | 1-7, 11-18, 22-25<br>8-10, 19-21 |
| Y | JP 2006-229871 A (MITSUBISHI ELECTRIC CORP.) 31 August 2006, paragraph [0023], fig. 4 (Family: none) | 1-7, 11-18, 22-24 |
| Y | JP 2010-129717 A (NGK SPARK PLUG CO., LTD.) 10 June 2010, paragraphs [0022]-[0024], fig. 8-9 (Family: none) | 23-24 |

Form PCT/ISA/210 (continuation of second sheet) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H06140831 B

- JP 2012054826 A